# EUROPEAN PATENT APPLICATION

(11) **EP 3 879 457 A2**
(43) Date of publication of application: **15.09.2021**
(21) Application number: 21180631.0
(22) Date of filing: 21.06.2021
(51) Int. Cl.: G06K 9/62

(54) **METHOD AND APPARATUS FOR MODEL DISTILLATION**

(30) Priority: 15.12.2020 CN 202011473801
(71) Applicant: Beijing Baidu Netcom Science and Technology Co., Ltd., Beijing 100085 (CN)
(72) Inventor: YANG, Fukui, Beijing, 100085 (CN); WEN, Shengzhao, Beijing, 100085 (CN); HAN, Junyu, Beijing, 100085 (CN)
(74) Representative: Nederlandsch Octrooibureau

(57) **Abstract**

The present disclosure provides a method, and an apparatus for model distillation, relates to the technical field of artificial intelligence, and in particular, relates to technical fields of deep learning and computer vision. A specific implementation includes: obtaining a batch of teacher features corresponding to a teacher model and a batch of student features corresponding to a student model; determining a set of teacher similarities corresponding to the batch of teacher features and a set of student similarities corresponding to the batch of student features; determining weights of loss values of features of images based on difference values corresponding to the images; and weighting a loss value of a feature of each image in a batch of images, training the student model by using a weighting result. The present disclosure may use the difference values between the feature similarities of the student model and the feature similarities of the teacher model to determine the weights of the loss values. The distillation process of the present disclosure may improve the detection capabilities of the models, reduce the delay of the execution devices, and reduce the occupation and consumption of computing resources such as memories.

## Description

### TECHNICAL FIELD

The present disclosure relates to the technical field of artificial intelligence, in particular, to the technical fields of deep learning and computer vision, and more in particular, to a method and apparatus for model distillation.

### BACKGROUND

With the development of Internet technology, more and more platforms need to use models to predict images. Some models cannot meet the needs of image processing because of their slow prediction speed.

In related technologies, model distillation can be used to supervise the training process of student models through a trained teacher model. Teacher models generally have some kind of predictive capabilities, such as strong predictive capabilities for certain targets. For example, the capabilities may be detection capabilities for human faces or detection capabilities for special shapes.

### SUMMARY

A method, an apparatus, an electronic device and a storage medium for model distillation are provided.

According to a first aspect, a method for model distillation is provided, and the method includes: extracting features of a batch of images by using a teacher model and a student model, respectively, and obtaining a batch of teacher features corresponding to the teacher model and a batch of student features corresponding to the student model; using each of the batch of teacher features and the batch of student features as a target batch of features, determining, for a feature of an image in the target batch of features, feature similarities between the feature and features of images in the target batch of features, and obtaining a set of teacher similarities corresponding to the batch of teacher features and a set of student similarities corresponding to the batch of student features; for an image in the batch of images, determining a difference value between feature similarities of the image in the set of the teacher similarities and the set of the student similarities, and determining a weight of a loss value of the feature of the image based on the difference value corresponding to the image, wherein a greater difference value corresponds to a greater weight of a loss value; and based on respective weights corresponding to the batch of images, weighting a loss value of a feature of each image in the batch of images, training the student model by using a weighting result, and obtaining a trained model.

According to a second aspect, an apparatus for model distillation is provided, and the apparatus includes: an extraction unit configured to extract features of a batch of images by using a teacher model and a student model, respectively, and obtain a batch of teacher features corresponding to the teacher model and a batch of student features corresponding to the student model; a similarity determining unit, configured to use each of the batch of teacher features and the batch of student features as a target batch of features, determine, for a feature of an image in the target batch of features, feature similarities between the feature and features of images in the target batch of features, and obtain a set of teacher similarities corresponding to the batch of teacher features and a set of student similarities corresponding to the batch of student features; a difference value determining unit, configured to, for an image in the batch of images, determine a difference value between feature similarities of the image in the set of the teacher similarities and the set of the student similarities, and determining a weight of a loss value of the feature of the image based on the difference value corresponding to the image, wherein a greater difference value corresponds to a greater weight of a loss value; and performing Hadamard product on the target batch of features and the transposed result, using results of the Hadamard product corresponding to the batch of teacher features as the set of the teacher similarities and using results of the Hadamard product corresponding to the batch of student features as the set of the student similarities.

According to a third aspect, an electronic device is provided, and the electronic device includes: one or more processors; and a memory for storing one or more programs, where the one or more programs, when executed by the one or more processors, cause the one or more processors to implement the method as described in any one of the implementations of the first aspect.

According to a fourth aspect, a computer readable storage medium storing a computer program is provided, where the program, when executed by a processor, implements the method as described in any one of the implementations of the first aspect.

According to a fifth aspect, a computer program product including a computer program is provided, where the computer program, when executed by a processor, implements the method as described in any one of the implementations of the first aspect.

The solutions according to the present disclosure may use the difference values between the feature similarities of the student model and the feature similarities of the teacher model to determine the weights of the loss values, thereby accurately distilling the models according to the difference between the predicted result and true value of each image. The distillation process of the present disclosure may improve the detection capabilities of the models, reduce the delay of the execution devices, and reduce the occupation and consumption of computing resources such as memories.

### BRIEF DESCRIPTION OF THE DRAWINGS

By reading the detailed description of non-limiting embodiments with reference to the following accompanying drawings, other features, objects and advantages of the present disclosure will become more apparent.
Fig. 1 is an example system architecture to which an embodiment of the present disclosure may be applied;
Fig. 2 is a flowchart of an embodiment of a method for model distillation according to the present disclosure;
Fig. 3 is a schematic diagram of an application of the method for model distillation according to the present disclosure;
Fig. 4 is a flowchart of another embodiment of the method for model distillation according to the present disclosure;
Fig. 5 is a schematic structural diagram of an embodiment of an apparatus for model distillation according to the present disclosure; and
Fig. 6 is a block diagram of an electronic device adapted to implement the method for model distillation of an embodiment of the present disclosure.

### DETAILED DESCRIPTION OF EMBODIMENTS

Example embodiments of the present disclosure are described below in combination with the accompanying drawings, where various details of the embodiments of the present disclosure are included to facilitate understanding and should be considered as examples only. Therefore, those of ordinary skill in the art should realize that various changes and modifications may be made to the embodiments described herein without departing from the scope and spirit of the present disclosure. Similarly, for clarity and conciseness, descriptions of well-know functions and structures are omitted in the following description.

It should be noted that the embodiments in the present disclosure and the features in the embodiments may be combined with each other on a non-conflict basis. The present disclosure will be described below in detail with reference to the accompanying drawings and in combination with the embodiments.

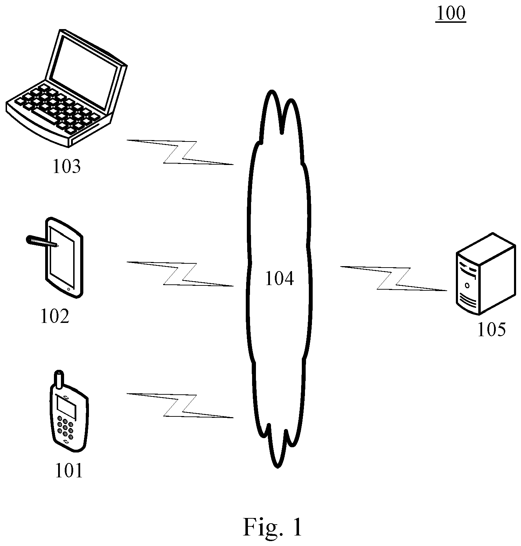

Fig. 1 illustrates an example system architecture 100 to which an embodiment of a method for model distillation or an apparatus for model distillation of the present disclosure may be applied.

As illustrated in Fig. 1, the system architecture 100 may include terminal devices 101, 102, 103, a network 104 and a server 105. The network 104 serves as a medium for providing a communication link between the terminal devices 101, 102, 103 and the server 105. The network 104 may include various types of connections, such as wired or wireless communication links, or optical fiber cables.

A user may use the terminal devices 101, 102, 103 to interact with the server 105 through the network 104 to receive or send messages. Various communication client applications, such as video applications, live broadcast applications, instant messaging tools, mailbox clients and social platform software, may be installed on the terminal devices 101, 102, 103.

The terminal devices 101, 102, 103 may be hardware or software. When the terminal devices 101, 102, 103 are hardware, the terminal devices 101, 102, 103 may be various electronic devices having a display screen, including but not limited to a smart phone, a tablet computer, an electronic book reader, a laptop computer and a desktop computer. When the terminal devices 101, 102, 103 are software, the terminal devices 101, 102, 103 may be installed in the electronic devices, and may be implemented as multiple software pieces or software modules (such as multiple software pieces or software modules for providing distributed services), or as a single software piece or software module. It is not specifically limited here.

The server 105 may be a server providing various services, such as a background server providing support to the terminal devices 101, 102, 103. The background server may perform processing such as analysis on a received batch of images, and feed back the processing result (for example, a trained model) to the terminal devices.

It should be noted that the method for model distillation provided by the embodiment of the present disclosure may be executed by the server 105, or may be executed by the terminal devices 101, 102, 103. Correspondingly, the apparatus for model distillation may be provided in the server 105, or may be provided in the terminal devices 101, 102, 103.

It should be appreciated that the number of the terminal devices, the network and the server in Fig. 1 is merely illustrative. Any number of terminal devices, networks and servers may be provided according to actual requirements.

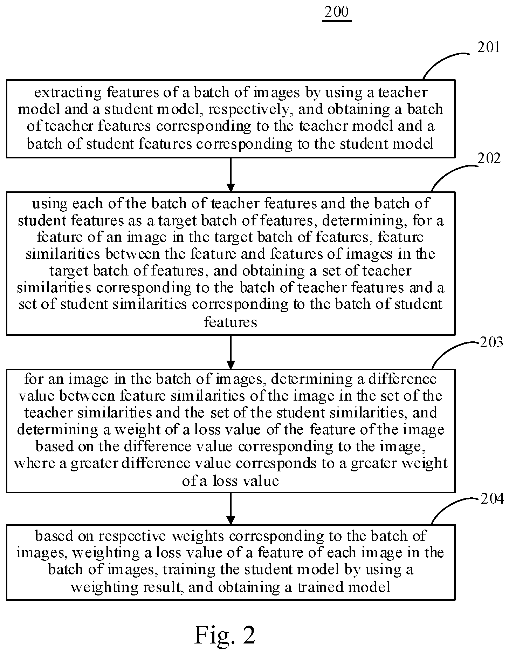

Further referring to Fig. 2, a flow 200 of an embodiment of the method for model distillation according to the present disclosure is illustrated. The method for model distillation includes steps 201 to 204.

Step 201 includes extracting features of a batch of images by using a teacher model and a student model, respectively, and obtaining a batch of teacher features corresponding to the teacher model and a batch of student features corresponding to the student model.

In this embodiment, an execution body that executes the method for model distillation (such as the server or terminal devices illustrated in Fig. 1) may extract the features of the batch of images using the teacher model and the student model. The result of the extraction may be the batch of teacher features corresponding to the teacher model and the batch of student features corresponding to the student model.

The batch of images may refer to a certain number of images, such as 32 images. The images may be various images, such as face images and object images. The student model and teacher model in the present disclosure are both deep neural networks and can be used to make various predictions, such as image recognition and image detection. The number of parameters of the teacher model is greater than the number of parameters of the student model.

Step 202 includes using each of the batch of teacher features and the batch of student features as a target batch of features, determining, for a feature of an image in the target batch of features, feature similarities between the feature and features of images in the target batch of features, and obtaining a set of teacher similarities corresponding to the batch of teacher features and a set of student similarities corresponding to the batch of student features.

In this embodiment, the execution body may use each of the batch of teacher features and the batch of student features as the target batch of features and determine a set of similarities for target batch of features. Specifically, the execution body may determine, for the feature (such as each feature) of the image in the target batch of features, the feature similarities between the feature and the features of images (which may alternatively be other images) in the target batch of features to obtain the set of the teacher similarities corresponding to the batch of teacher features and the set of the student similarities corresponding to the batch of student features.

For example, the batch of teacher features of an identity photo scenario includes the features of 32 identity photo images. The features of the 32 identity photo images may be arranged in the form of a matrix. The execution body may determine, for the feature of the first identity photo image A in the matrix, the cosine similarity between the feature of A and the feature of A, the cosine similarity between the feature of A and the feature of the second identity photo image B, and the cosine similarity between the feature of A and the feature of the third identity photo image C ... and so on, until the cosine similarity between the feature of A and the feature of each image is determined. Then, the execution body may traverse features of the identity photo images other than A in the matrix to determine the cosine similarities between the feature and the features of images in the matrix. The result determined by traversing the features of images in the matrix may form the set of similarities.

Step 203 includes, for an image in the batch of images, determining a difference value between feature similarities of the image in the set of the teacher similarities and the set of the student similarities, and determining a weight of a loss value of the feature of the image based on the difference value corresponding to the image, where a greater difference value corresponds to a greater weight of a loss value.

In this embodiment, the execution body may determine, in the set of the teacher similarities and the set of the student similarities, the difference value between the feature similarities of a given image. Specifically, the execution body may determine, for the image (such as each image) in the batch of images, in the set of the teacher similarities and the set of the student similarities, the difference value between the feature similarities of the image. Further, the execution body may determine the weight of the loss value of the feature of the image based on the difference value corresponding to the image. A greater difference value corresponds to a greater weight of a loss value, that is, if a difference value is greater, the weight of the loss value of the feature of the image of the feature similarities corresponding to the difference value is greater.

In practice, the execution body may determine the weight of the loss value of the feature of the image based on the difference value corresponding to the image in various ways. For example, the execution body may input the difference value corresponding to the image to a preset model for outputting a weight, thereby obtaining the weight of the image output from the preset model. For another example, the execution body may process the difference value corresponding to each image in the batch of images into a decimal or a fraction between 0 and 1 to obtain a processing result, and the execution body may use the processing result as a weight. The ratio between the processing results corresponding to images is the same as the ratio between the difference values corresponding to images.

Step 204 includes, based on respective weights corresponding to the batch of images, weighting a loss value of a feature of each image in the batch of images, training the student model by using a weighting result, and obtaining a trained model.

In this embodiment, the execution body may acquire the loss value of the feature of each image, and based on the weight corresponding to each image in the batch of images, weight the loss value of the feature of the image. A weighting result of the loss value may be used to train the student model, and the trained student model may be referred to as a trained model.

The execution body may acquire the loss value of the feature of each image in various ways. For example, the execution body may use the feature of the image output by the student model as a predicted value, use the feature of the image output by the teacher model as a true value, and determine the loss values corresponding to the predicted value and the true value by using a preset loss function. Alternatively, the execution body may receive a loss value determined by other electronic devices in this way. The preset loss function may be various loss functions, such as a two-norm (L2) loss function.

The method provided by the embodiment of the present disclosure may use the difference values between the feature similarities of the student model and the feature similarities of the teacher model to determine the weights of the loss values, thereby accurately distilling the models according to the difference value between the predicted result and true value of each image. The distillation process of the present disclosure may improve the detection capabilities of the models, reduce the delay of the execution devices, and reduce the occupation and consumption of computing resources such as memories.

In some alternative implementations of this embodiment, for an image in the batch of images, determining a difference value between feature similarities of the image in the set of the teacher similarities and the set of the student similarities, in step 203 may include: for the image in the batch of images, determining a difference between a feature similarity of the image in the set of the teacher similarities and a feature similarity of the image in the set of the student similarities; and determining an absolute value of the difference and using the absolute value as the difference value.

In these alternative implementations, the execution body may determine, for the image (such as each image) in the batch of images, the difference between the feature similarities of the image in the set of the teacher similarities and the feature similarity of the image in the set of the student similarity. The execution body may use the absolute value of the difference as the difference value.

These implementations may accurately determine the difference value by calculating the difference and the absolute value.

In some alternative implementations of this embodiment, step 202 may include: using each of the batch of teacher features and the batch of student features as the target batch of features and determining a transposed result of the target batch of features; and performing Hadamard product on the target batch of features and the transposed result, using results of the Hadamard product corresponding to the batch of teacher features as the set of the teacher similarities and using results of the Hadamard product corresponding to the batch of student features as the set of the student similarities.

In these alternative implementations, the batch of features are presented in the form of a matrix (i.e., a matrix of the batch of features). When determining the similarities, the execution body may perform Hadamard product for each matrix of the batch of features on the transposed result of the matrix of the batch of features and the matrix of the batch of features to obtain a result of the Hadamard product. The result of the Hadamard product is a set of the similarities.

These implementations may simplify through the Hadamard product the steps of determining the sets of the similarities to reduce the amount of calculation, thereby improving the distillation efficiency of the models.

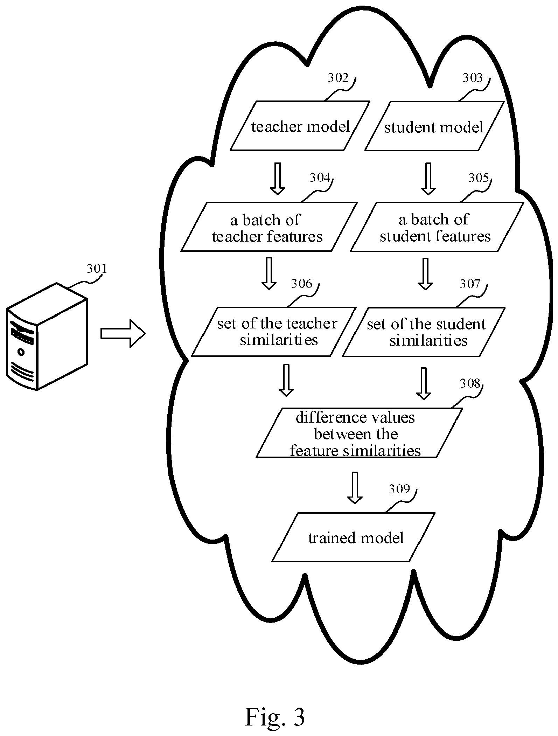

Further referring to Fig. 3, Fig. 3 is a schematic diagram of an application of the method for model distillation according to the present disclosure. In the application scenario of Fig. 3, the execution body 301 extracts the features of the batch of images by using the teacher model 302 and the student model 303, respectively, and obtains the batch of teacher features 304 corresponding to the teacher model and the batch of student features 305 corresponding to the student model. The execution body 301 uses each of the batch of teacher features 304 and the batch of student features 305 as the target batch of features, and for the feature of the image in the target batch of features, determines the feature similarity between the feature and the feature of each image in the target batch of features, and obtains the set of the teacher similarities 306 corresponding to the batch of teacher features and the set of the student similarities 307 corresponding to the batch of student features. For the image in the batch of images, the execution body 301 determines the difference value 308 of the feature similarities of the image in the set of the teacher similarities and the set of the student similarities, and determines the weight of the loss value of the feature of the image based on the difference value corresponding to the image, where the greater difference value corresponds to the greater weight of the loss value. The execution body 301 weights the loss value of the feature of each image in the batch of images based on the weights corresponding to the batch of images, and trains the student model by using the weighting result to obtain the trained model 309.

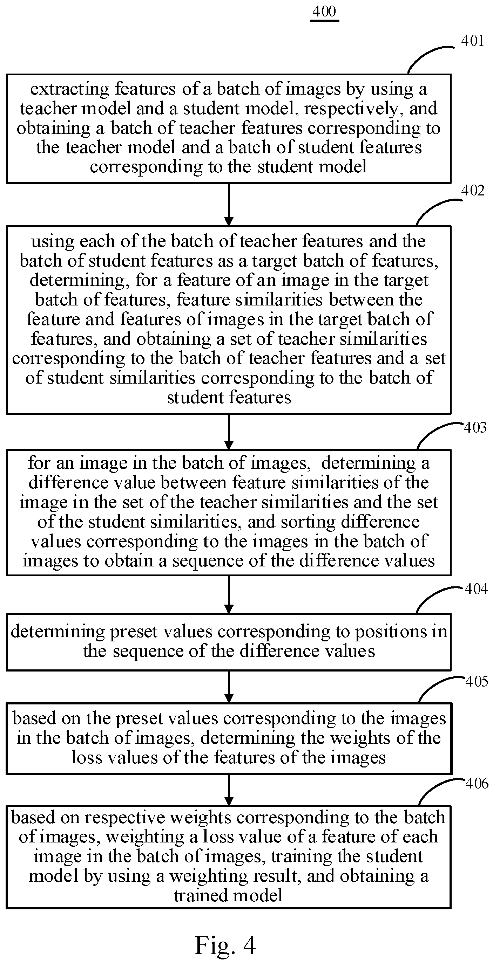

Further referring to Fig. 4, a flow 400 of another embodiment of the method for model distillation is illustrated. The flow 400 includes steps 401 to 406.

Step 401 includes extracting features of a batch of images by using a teacher model and a student model, respectively, and obtaining a batch of teacher features corresponding to the teacher model and a batch of student features corresponding to the student model.

In this embodiment, the execution body that executes the method for model distillation (such as the server or terminal devices illustrated in Fig. 1) may extract the features of the batch of images using the teacher model and the student model respectively. The result of the extraction may be the batch of teacher features corresponding to the teacher model and the batch of student features corresponding to the student model.

Step 402 includes using each of the batch of teacher features and the batch of student features as a target batch of features, determining, for a feature of an image in the target batch of features, feature similarities between the feature and features of images in the target batch of features, and obtaining a set of teacher similarities corresponding to the batch of teacher features and a set of student similarities corresponding to the batch of student features.

In this embodiment, the execution body may use each of the batch of teacher features and the batch of student features as a target batch of features and determine a set of similarities for the target batch of features. Specifically, the execution body may determine, for the feature (such as each feature) of the image in the target batch of features, the feature similarities between the feature and the features of images (which may alternatively be other images) in the target batch of features to obtain the set of the teacher similarities corresponding to the batch of teacher features and the set of the student similarities corresponding to the batch of student features.

Step 403 includes, for an image in the batch of images, determining a difference value between feature similarities of the image in the set of the teacher similarities and the set of the student similarities, and sorting difference values corresponding to the images in the batch of images to obtain a sequence of the difference values.

In this embodiment, the execution body may sort the difference values corresponding to the images in the batch of images to obtain the sequence of the difference values. The sorting may be performed in an decreasing order of difference values, or an increasing order of difference values.

Step 404 includes determining preset values corresponding to positions in the sequence of the difference values, where for any two difference values in the sequence of the difference values, a preset value corresponding to a position of a greater difference value is greater than a preset value corresponding to a position of a smaller difference value.

In this embodiment, there may be a corresponding value for each position in the sequence of the difference values. For example, a preset value corresponding to the position of the greatest difference value may be 0.95, and a preset value corresponding to the position of the second greatest difference value may be 0.9. For any two difference values in the sequence of the difference values, if a difference value is greater, the preset value corresponding to the position of the difference value is also greater. The preset value may be within a preset value range, for example, the preset value range may be [-1, 1].

Step 405 includes, based on the preset values corresponding to the images in the batch of images, determining weights of loss values of the features of the images, where a greater difference value corresponds to a greater weight of a loss value.

In this embodiment, the execution body may determine, based on the preset value corresponding to each image in the batch of images, the weight of the loss value of the feature of each image. In practice, the execution body may determine, based on the preset value corresponding to each image in the batch of images, the weight of the loss value of the feature of each image in various ways. For example, the execution body may directly use the preset value corresponding to each image as the weight of the loss value of the feature of each image.

Step 406 includes, based on respective weights corresponding to the batch of images, weighting a loss value of a feature of each image in the batch of images, training the student model by using a weighting result, and obtaining a trained model.

In this embodiment, the execution body may acquire the loss value of the feature of each image, and based on the weight corresponding to each image in the batch of images, weight the loss value of the feature of each image. A weighting result of the loss value may be used to train the student model, and the trained student model may be referred to as a trained model.

This embodiment may accurately determine the weights of the loss values based on the preset values corresponding to sorting positions of the difference values.

In some alternative implementations of this embodiment, step 405 may further include: for the image in the batch of images, determining a product of the preset value corresponding to the image and a first constant; and determining a sum of the product and a second constant, and acquiring a hyperbolic tangent value of the sum as the weight of the loss value of the image.

In these alternative implementations, the execution body may determine the product of the preset values corresponding to the image and the first constant, and determine the sum of the product and the second constant, thereby acquiring the hyperbolic tangent value of the sum. The execution body may use the hyperbolic tangent value as the weight of the image.

Specifically, tanh(wx+b) may be used to represent the weight, where w and b are the first constant and the second constant, respectively, and the value range of wx+b is any real number, and tanh represents the hyperbolic tangent value of wx+b.

In these implementations, the image, which has a greater difference from the prediction of the teacher model, acquires a larger weight through the hyperbolic tangent value, thereby facilitating rapid convergence of the student model in the distillation process.

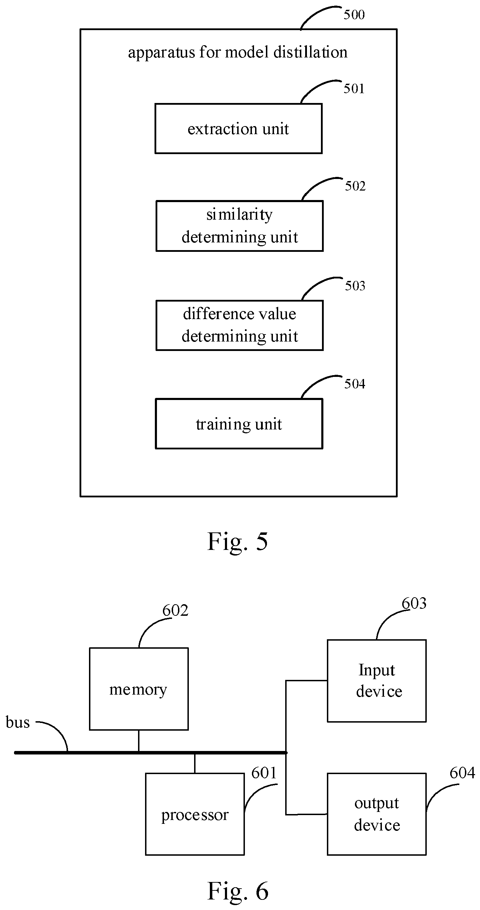

Further referring to Fig. 5, as an implementation of the method illustrated in each of the above figures, the present disclosure provides an embodiment of an apparatus for model distillation. The embodiment of the apparatus corresponds to the embodiment of the method illustrated in Fig. 2. In addition to the features described below, the embodiment of the apparatus may alternatively include the same or corresponding features or effect as the embodiment of the method illustrated in Fig.2, and the apparatus is particularly applicable to various electronic devices.

As illustrated in Fig. 5, the apparatus 500 for model distillation of this embodiment includes: an extraction unit 501, a similarity determining unit 502, a difference value determining unit 503 and a training unit 504. The extraction unit 501 is configured to extract features of a batch of images by using a teacher model and a student model, respectively, and obtain a batch of teacher features corresponding to the teacher model and a batch of student features corresponding to the student model; the similarity determining unit 502 is configured to use each of the batch of teacher features and the batch of student features as a target batch of features, determine, for a feature of an image in the target batch of features, feature similarities between the feature and features of images in the target batch of features, and obtain a set of teacher similarities corresponding to the batch of teacher features and a set of student similarities corresponding to the batch of student features; the difference value determining unit 503 is configured to, for an image in the batch of images, determine a difference value between feature similarities of the image in the set of the teacher similarities and the set of the student similarities, and determine a weight of a loss value of the feature of the image based on the difference value corresponding to the image, where a greater difference value corresponds to a greater weight of a loss value; and the training unit 504 is configured to, based on respective weights corresponding to the batch of images, weight a loss value of a feature of each image in the batch of images, train the student model by using a weighting result, and obtain a trained model.

In this embodiment, the specific processing of the extraction unit 501, the similarity determining unit 502, the difference value determining unit 503 and the training unit 504 of the apparatus 500 for model distillation and the technical effects thereof may be described with reference to the related description of steps 201 to 204 in the embodiment corresponding to Fig. 2, and are thus not repeated here.

In some alternative implementations of this embodiment, the difference value determining unit is further configured to determine a weight of a loss value of the feature of the image based on the difference value corresponding to the image through: sorting the difference values corresponding to the images in the batch of images to obtain a sequence of the difference values; determining preset values corresponding to positions in the sequence of the difference values, where for any two difference values in the sequence of the difference values, a preset value corresponding to a position of a greater difference value is greater than a preset value corresponding to a position of a smaller difference value; and based on the preset values corresponding to the images in the batch of images, determine the weights of the loss values of the features of the images.

In some alternative implementations of this embodiment, the difference value determining unit is further configured to: based on the preset values corresponding to the images in the batch of images, determine the weights of the loss values of the features of the images by: for the image in the batch of images, determining a product of the preset value corresponding to the image and a first constant; and determining a sum of the product and a second constant, and acquiring a hyperbolic tangent values of the sum as the weight of the loss value of the image.

In some alternative implementations of this embodiment, the difference value determining unit is further configured to for an image in the batch of images, determine a difference value between feature similarities of the image in the set of the teacher similarities and the set of the student similarities by: for the image in the batch of images, determining a difference between a feature similarity of the image in the set of the teacher similarities and a feature similarity of the image in the set of the student similarities; and determining an absolute value of the difference and using the absolute value as the difference value.

In some alternative implementations of this embodiment, the similarity determining unit is further configured to: use each of the batch of teacher features and the batch of student features as a target batch of features, determine, for a feature of an image in the target batch of features, feature similarities between the feature and features of images in the target batch of features, and obtain a set of teacher similarities corresponding to the batch of teacher features and a set of student similarities corresponding to the batch of student features by: using each of the batch of teacher features and the batch of student features as the target batch of features and determining a transposed result of the target batch of features; and performing Hadamard product on the target batch of features and the transposed result, using results of the Hadamard product corresponding to the batch of teacher features as the set of the teacher similarities and using results of the Hadamard product corresponding to the batch of student features as the set of the student similarities.

According to an embodiment of the present disclosure, the present disclosure further provides an electronic device, a readable storage medium and a computer program product.

Fig. 6 is a block diagram of an electronic device adapted to implement the method for model distillation according to an embodiment of the present disclosure. The electronic device is intended to represent various forms of digital computers, such as laptops, desktops, worktables, personal digital assistants, servers, blade servers, mainframe computers and other suitable computers. The electronic device may also represent various forms of mobile devices, such as personal digital processing, cellular phones, smart phones, wearable devices and other similar computing devices. The parts, their connections and relationships, and their functions illustrated herein are examples only, and are not intended to limit the implementations of the present disclosure as described and/or claimed herein.

As illustrated in Fig. 6, the electronic device includes one or more processors 601, a memory 602 and interfaces for connecting components, including a high-speed interface and a low-speed interface. The components are interconnected by using different buses and may be mounted on a common motherboard or otherwise as required. The processor may process instructions executed within the electronic device, including instructions stored in memory or on memory to display graphical information of the GUI on an external input or output device (such as a display device coupled to an interface). In other embodiments, multiple processors and/or multiple buses and multiple memories may be used with multiple memories, if required. Similarly, multiple electronic devices may be connected (for example, used as a server array, a set of blade servers or a multiprocessor system), and the electronic device provides some of the necessary operations. An example of a processor 601 is illustrated in Fig. 6.

The memory 602 is a non-transitory computer readable storage medium according to the present disclosure. The memory stores instructions executable by at least one processor to cause the at least one processor to execute the method for model distillation according to the present disclosure. The non-transitory computer readable storage medium of the present disclosure stores computer instructions for causing a computer to execute the method for model distillation according to the present disclosure.

As a non-transitory computer readable storage medium, the memory 602 may be used to store non-transitory software programs, non-transitory computer executable programs and modules, such as the program instructions or modules corresponding to the method for model distillation in the embodiment of the present disclosure (for example, the extraction unit 501, the similarity determining unit 502, the difference value determining unit 503 and the training unit 504 illustrated in Fig. 5). The processor 601 runs the non-transitory software programs, instructions and modules stored in the memory 602 to execute various functional applications and data processing of the server, thereby implementing the method for model distillation in the embodiment of the method.

The memory 602 may include a storage program area and a storage data area, where the storage program area may store an operating system and an application program required by at least one function; and the storage data area may store data created by the electronic device when executing the method for model distillation. In addition, the memory 602 may include a high-speed random access memory, and may further include a non-transitory memory, such as at least one magnetic disk storage device, a flash memory or other non-transitory solid state storage devices. In some embodiments, the memory 602 may alternatively include a memory disposed remotely relative to the processor 601, which may be connected through a network to the electronic device adapted to execute the method for model distillation. Examples of such networks include, but are not limited to, the Internet, enterprise intranets, local area networks, mobile communication networks and combinations thereof.

The electronic device adapted to execute the method for model distillation may further include an input device 603 and an output device 604. The processor 601, the memory 602, the input device 603 and the output device 604 may be interconnected through a bus or other means, and an example of a connection through the bus is illustrated in Fig. 6.

The input device 603 may receive input digit or character information, and generate key signal input related to user settings and functional control of the electronic device adapted to execute the method for model distillation, such as a touch screen, a keypad, a mouse, a track pad, a touch pad, a pointer bar, one or more mouse buttons, a trackball or a joystick. The output device 604 may include a display device, an auxiliary lighting device (such as an LED) and a tactile feedback device (such as a vibration motor). The display device may include, but is not limited to, a liquid crystal display (LCD), a light emitting diode (LED) display and a plasma display. In some embodiments, the display device may be a touch screen.

The various embodiments of the systems and technologies described herein may be implemented in digital electronic circuit systems, integrated circuit systems, ASICs (application specific integrated circuits), computer hardware, firmware, software and/or combinations thereof. The various embodiments may include: being implemented in one or more computer programs, where the one or more computer programs may be executed and/or interpreted on a programmable system including at least one programmable processor, and the programmable processor may be a dedicated or general-purpose programmable processor, which may receive data and instructions from a memory system, at least one input device and at least one output device, and send the data and instructions to the memory system, the at least one input device and the at least one output device.

These computing programs (also known as programs, software, software applications or code) include machine instructions of a programmable processor and may be implemented in high-level procedures and/or object-oriented programming languages, and/or assembly or machine languages. As used herein, the terms "machine readable medium" and "computer readable medium" refer to any computer program product, device and/or apparatus (such as magnetic disk, optical disk, memory and programmable logic device (PLD)) for providing machine instructions and/or data to a programmable processor, including a machine readable medium that receives machine instructions as machine readable signals. The term "machine readable signal" refers to any signal used to provide machine instructions and/or data to a programmable processor.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementation of the systems and technologies described herein), or a computing system including any combination of such background component, middleware component or front-end component. The components of the system may be interconnected by any form or medium of digital data communication (such as a communication network). Examples of communication networks include a local area network (LAN), a wide area network (WAN), and the Internet.

The computer system may include a client and a server. The client and the server are typically remote from each other and typically interact through a communication network. The relationship between the client and the server is generated by a computer program running on the corresponding computer and having a client-server relationship with each other. The server may be a cloud server, also known as a cloud computing server or a cloud host, which is a host product in the cloud computing service system and may solve the defects of difficult management and weak service scalability existing in a conventional physical host and a VPS (Virtual Private Server) service. The server may alternatively be a serve of a distributed system, or a server combined with a blockchain.

The flowcharts and block diagrams in the accompanying drawings illustrate architectures, functions and operations that may be implemented according to the systems, methods and computer program products of the various embodiments of the present disclosure. In this regard, each of the blocks in the flowcharts or block diagrams may represent a module, a program segment, or a code portion, the module, program segment, or code portion including one or more executable instructions for implementing specified logic functions. It should also be noted that, in some alternative implementations, the functions denoted by the blocks may occur in a sequence different from the sequences illustrated in the figures. For example, any two blocks presented in succession may be executed, substantially in parallel, or they may sometimes be in a reverse sequence, depending on the function involved. It should also be noted that each block in the block diagrams and/or flowcharts as well as a combination of blocks in the block diagrams and/or flowcharts may be implemented using a dedicated hardware-based system executing specified functions or operations, or by a combination of a dedicated hardware and computer instructions.

The units or modules involved in the embodiments of the present disclosure may be implemented by means of software or hardware. The described units or modules may also be provided in a processor, for example, described as: a processor, including an extraction unit, a similarity determining unit, a difference value determining unit and a training unit, where the names of these units do not in some cases constitute a limitation to such units themselves. For example, the extraction unit may also be described as "extracting features of a batch of images by using a teacher model and a student model, respectively, and obtaining a batch of teacher features corresponding to the teacher model and a batch of student features corresponding to the student model".

In another aspect, the present disclosure further provides a computer readable storage medium. The computer readable storage medium may be a computer readable storage medium included in the apparatus described in the previous embodiments, or a stand-alone computer readable storage medium not assembled into the apparatus. The computer readable storage medium stores one or more programs. The one or more programs, when executed by one or more processors, cause the one or more processor to: extract features of a batch of images by using a teacher model and a student model, respectively, and obtain a batch of teacher features corresponding to the teacher model and a batch of student features corresponding to the student model; use each of the batch of teacher features and the batch of student features as a target batch of features, determine , for a feature of an image in the target batch of features, feature similarities between the feature and features of images in the target batch of features, and obtain a set of teacher similarities corresponding to the batch of teacher features and a set of student similarities corresponding to the batch of student features; for an image in the batch of images, determine a difference value between feature similarities of the image in the set of the teacher similarities and the set of the student similarities, determine a weight of a loss value of the feature of the image based on the difference value corresponding to the image, where a greater difference value corresponds to a greater weight of a loss value; and based on respective weights corresponding to the batch of images, weight a loss value of a feature of each image in the batch of images, train the student model by using a weighting result, and obtain a trained model.

The above description only provides an explanation of the preferred embodiments of the present disclosure and the technical principles used. It should be appreciated by those skilled in the art that the inventive scope of the present disclosure is not limited to the technical solutions formed by the particular combinations of the above technical features. The inventive scope should also cover other technical solutions formed by any combinations of the above technical features or equivalent features thereof without departing from the concept of the present disclosure, such as technical solutions formed through the above features and technical features having similar functions provided (or not provided) in the present disclosure being replaced with each other.

## Claims

1. A method for model distillation, the method comprising:
extracting (201) features of a batch of images by using a teacher model and a student model, respectively, and obtaining a batch of teacher features corresponding to the teacher model and a batch of student features corresponding to the student model;
using (202) each of the batch of teacher features and the batch of student features as a target batch of features, determining, for a feature of an image in the target batch of features, feature similarities between the feature and features of images in the target batch of features, and obtaining a set of teacher similarities corresponding to the batch of teacher features and a set of student similarities corresponding to the batch of student features;
for an image in the batch of images, determining (203) a difference value between feature similarities of the image in the set of the teacher similarities and the set of the student similarities, and determining a weight of a loss value of the feature of the image based on the difference value corresponding to the image, wherein a greater difference value corresponds to a greater weight of a loss value; and
based on respective weights corresponding to the batch of images, weighting (204) a loss value of a feature of each image in the batch of images, training the student model by using a weighting result, and obtaining a trained model.

2. The method according to claim 1, wherein the determining a weight of a loss value of the feature of the image based on the difference value corresponding to the image, comprises:
sorting (403) the difference values corresponding to the images in the batch of images to obtain a sequence of the difference values;
determining (404) preset values corresponding to positions in the sequence of the difference values, wherein for any two difference values in the sequence of the difference values, a preset value corresponding to a position of a greater difference value is greater than a preset value corresponding to a position of a smaller difference value; and
based on the preset values corresponding to the images in the batch of images, determining (405) the weights of the loss values of the features of the images.

3. The method according to claim 2, wherein the based on the preset values corresponding to the images in the batch of images, determining the weights of the loss values of the features of the images, comprises:
for the image in the batch of images, determining a product of the preset value corresponding to the image and a first constant; and
determining a sum of the product and a second constant, and acquiring a hyperbolic tangent value of the sum as the weight of the loss value of the image.

4. The method according to any one of claims 1 to 3, wherein the for an image in the batch of images, determining a difference value between feature similarities of the image in the set of the teacher similarities and the set of the student similarities, comprises:
for the image in the batch of images, determining a difference between a feature similarity of the image in the set of the teacher similarities and a feature similarity of the image in the set of the student similarities; and
determining an absolute value of the difference and using the absolute value as the difference value.

5. The method according to any one of claims 1 to 4, wherein the using each of the batch of teacher features and the batch of student features as a target batch of features, determining, for a feature of an image in the target batch of features, feature similarities between the feature and features of images in the target batch of features, and obtaining a set of teacher similarities corresponding to the batch of teacher features and a set of student similarities corresponding to the batch of student features, comprises:
using each of the batch of teacher features and the batch of student features as the target batch of features and determining a transposed result of the target batch of features; and
performing Hadamard product on the target batch of features and the transposed result, using results of the Hadamard product corresponding to the batch of teacher features as the set of the teacher similarities and using results of the Hadamard product corresponding to the batch of student features as the set of the student similarities.

6. An apparatus for model distillation, the apparatus comprising:
an extraction unit (501), configured to extract features of a batch of images by using a teacher model and a student model, respectively, and obtain a batch of teacher features corresponding to the teacher model and a batch of student features corresponding to the student model;
a similarity determining unit (502), configured to use each of the batch of teacher features and the batch of student features as a target batch of features, determine, for a feature of an image in the target batch of features, feature similarities between the feature and features of images in the target batch of features, and obtain a set of teacher similarities corresponding to the batch of teacher features and a set of student similarities corresponding to the batch of student features;
a difference value determining unit (503), configured to, for an image in the batch of images, determine a difference value between feature similarities of the image in the set of the teacher similarities and the set of the student similarities, and determining a weight of a loss value of the feature of the image based on the difference value corresponding to the image, wherein a greater difference value corresponds to a greater weight of a loss value; and
a training unit (504), configured to, based on respective weights corresponding to the batch of images, weight a loss value of a feature of each image in the batch of images, train the student model by using a weighting result, and obtain a trained model.

7. The apparatus according to claim 6, wherein the difference value determining unit is further configured to determine the weight of the loss value of the feature of the image based on the difference value corresponding to the image by:
sorting the difference values corresponding to the images in the batch of images to obtain a sequence of the difference values;
determining preset values corresponding to positions in the sequence of the difference values, wherein for any two difference values in the sequence of the difference values, a preset value corresponding to a position of a greater difference value is greater than a preset value corresponding to a position of a smaller difference value; and
based on the preset values corresponding to the images in the batch of images, determining the weights of the loss values of the features of the images.

8. The apparatus according to claim 7, wherein the difference value determining unit is further configured to based on the preset values corresponding to the images in the batch of images, determine the weights of the loss values of the features of the images by:
for the image in the batch of images, determining a product of the preset value corresponding to the image and a first constant; and
determining a sum of the product and a second constant, and acquiring a hyperbolic tangent value of the sum as the weight of the loss value of the image.

9. The apparatus according to any one of claims 6 to 8, wherein the difference value determining unit is further configured to for the image in the batch of images, determine the difference value between feature similarities of the image in the set of the teacher similarities and the set of the student similarities by:
for the image in the batch of images, determining a difference between a feature similarity of the image in the set of the teacher similarities and a feature similarity of the image in the set of the student similarities; and
determining an absolute value of the difference and using the absolute value as the difference value.

10. The apparatus according to any one of claims 6 to 9, wherein the similarity determining unit is further configured to use each of the batch of teacher features and the batch of student features as the target batch of features, determine, for the feature of the image in the target batch of features, feature similarities between the feature and features of images in the target batch of features, and obtaining the set of teacher similarities corresponding to the batch of teacher features and the set of student similarities corresponding to the batch of student features by:
using each of the batch of teacher features and the batch of student features as the target batch of features and determining a transposed result of the target batch of features; and
performing Hadamard product on the target batch of features and the transposed result, using results of the Hadamard product corresponding to the batch of teacher features as the set of the teacher similarities and using results of the Hadamard product corresponding to the batch of student features as the set of the student similarities.

11. An electronic device, comprising:
one or more processors; and
a memory for storing one or more programs, wherein the one or more programs, when executed by the one or more processors, cause the one or more processors to implement the method according to any one of claims 1 to 5.

12. A computer readable storage medium storing a computer program, wherein the program, when executed by a processor, implements the method according to any one of claims 1 to 5.

13. A computer program product comprising a computer program, wherein the computer program, when executed by a processor, implements the method according to any one of claims 1 to 5.
